# FASCICULE DE BREVET EUROPEEN

(11) **EP 0 749 853 B1**
(45) Date de publication et mention de la délivrance du brevet: **21.08.2002**
(21) Numéro de dépôt: 96401310.6
(22) Date de dépôt: 17.06.1996
(51) Int. Cl.: B60B 21/12

(54) **Dispositif pour insonoriser une roue, notamment une roue de véhicule automobile**
Vorrichtung für Geräuschdämpfung eines Rades, insbesondere eines Fahrzeugrades
Device for sound damping of a wheel, in particular of a motor vehicle

(30) Priorité: 23.06.1995 FR 9507547
(43) Date de publication de la demande: 27.12.1996
(73) Titulaire: SOLLAC S.A., 92800 Puteaux (FR)
(72) Inventeur: Marron, Guy, 13120 Gardanne (FR); Engel, Didier, 13500 Martigues (FR)
(74) Mandataire: Lanceplaine, Jean-Claude

(56) Documents cités:
- GB-A- 2 158 785
- US-A- 4 122 882
- US-A- 4 896 921
- US-A- 5 311 916
- PATENT ABSTRACTS OF JAPAN vol. 16, no. 452 (M-1313), 21 Septembre 1992 & JP-A-04 159101 (MAZDA MOTOR CORP), 2 Juin 1992,
- PATENT ABSTRACTS OF JAPAN vol. 18, no. 383 (M-1640), 19 Juillet 1994 & JP-A-06 106903 (MAZDA MOTOR CORP), 19 Avril 1994,
- PATENT ABSTRACTS OF JAPAN vol. 18, no. 383 (M-1640), 19 Juillet 1994 & JP-A-06 106902 (MAZDA MOTOR CORP), 19 Avril 1994,

## Description

La présente invention concerne un dispositif pour insonoriser une roue, et, notamment une roue de véhicule automobile, roue comprenant un voile central circulaire, une jante sensiblement cylindrique composée d'une partie arrière et d'une partie avant, lesdites parties avant et arrière étant séparées par le plan du voile qui s'étend sensiblement perpendiculairement à l'axe de la jante.

L'amélioration du confort des usagers de véhicules automobiles oblige les constructeurs de véhicules automobiles à rechercher sur lesdits véhicules, les sources de vibrations et à tenter de les réduire ou, si possible, de les éliminer.

Dans le domaine des roues de véhicule automobile, les roues réalisées, par exemple, par emboutissage, fluotournage, ou par roulage, présentent l'inconvénient d'émettre et de transmettre des vibrations qui se répercutent au niveau de l'habitacle.

Les vibrations des roues génèrent un bruit qui peut être de type aérodynamique, à des fréquences supérieures à 500 Hz, ou de type solidien ou structurel à des fréquences inférieures à 500 Hz.

De nombreuses études ont porté sur une quantification de différents effets, notamment l'influence du dessin des sculptures des pneumatiques, du revêtement des chaussées, de la vitesse du véhicule, de l'acier dont est composée la roue.

On connaît du brevet FR n^{.} 76 15 476, un dispositif de réduction du bruit d'une roue, lors du freinage, comprenant une lame élastique du type lame à ressort dont les points d'appui sont placés au niveau des ventres de vibrations de la roue.

On connaît également dans le document JP-A-06103903 un dispositif pour insonoriser une roue, et, notamment une roue de véhicule automobile, roue comprenant un voile central circulaire, une jante sensiblement cylindrique composée d'une partie cylindrique arrière et d'une partie cylindrique avant, les parties étant séparées par le plan du voile qui s'étend sensiblement perpendiculairement à l'axe de la jante, le dispositif est composé d'au moins une couronne sensiblement cylindrique, placée concentriquement à la jante, au moins un moyen de couplage mécanique de ladite couronne cylindrique sur la jante, ledit moyen de couplage assurant un cerclage de ladite couronne sur les parties cylindriques de la jante.

L'invention a pour but l'amélioration du confort acoustique des usagers de véhicules automobiles dans tous les domaines de fonctionnement du véhicule.

L'invention a pour objet un dispositif qui se caractérise en ce que la couronne comporte au moins une couche d'un matériau viscoélastique et a une section transversale en forme d'oméga et comporte deux bords circulaires d'appui assurant le contact de ladite couronne avec les parties cylindriques de la jante.

Selon d'autres caractéristiques de l'invention :
- la couronne est métallique, de préférence en acier,
- la couronne est en un matériau de type sandwich,
- la couronne est formée par au moins une bande dont les extrémités sont reliées par ledit moyen de couplage,
- ledit moyen de couplage de la couronne comprend au moins une agrafe coopérant avec des organes d'accrochage ménagés sur les extrémités de ladite au moins une bande formant ladite couronne,
- l'agrafe est formée par une agrafe en "C" permettant, par son élasticité, d'exercer une tension sur la couronné et le maintien de ladite couronne sur la jante,
- les organes d'accrochage sont formés par au moins deux crochets disposés sur les extrémités de ladite au moins une bande formant ladite couronne,
- les organes d'accrochage sont formés par au moins deux lumières ménagées sur les extrémités de ladite au moins une bande formant ladite couronne.

D'autres caractéristiques et avantages de l'invention apparaîtront au cours de la description qui va suivre, donnée uniquement à titre d'exemple et faite en référence aux dessins annexés, sur lesquels :
- la Fig. 1 est une vue partielle en perspective d'une roue équipée d'un dispositif d'insonorisation selon l'invention,
- la Fig. 2 est une vue, en coupe transversale, d'un exemple de réalisation de la couronne du dispositif selon l'invention,
- la Fig. 3 est une vue en perspective d'un exemple de réalisation d'un moyen de couplage de la couronne du dispositif selon l'invention.

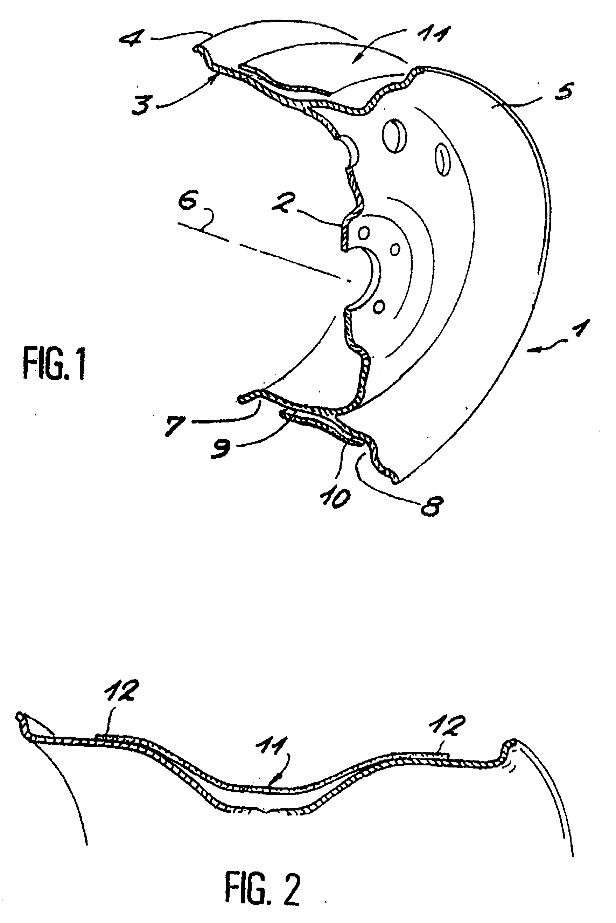

Le dispositif pour insonoriser une roue, par exemple, de véhicule automobile s'adapte sur une roue 1 de véhicule, comme représentée sur la Fig. 1, la roue comprenant une voile 2 central circulaire, une jante 3 sensiblement cylindrique composée d'une partie cylindrique arrière 4 et d'une partie cylindrique avant 5, les parties 4 et 5 étant séparées par le plan de voile 2 qui s'étend perpendiculairement à l'axe 6 de la jante 3, axe correspondant à l'axe de rotation de la roue.

Dans l'exemple de réalisation représenté sur la Fig. 1, la jante 3 comporte une gorge torique 7 arrière et une gorge torique avant 8 ainsi que deux épaulements 9 et 10 opposés générant une base creuse au niveau du voile 2 central. La base creuse a une fonction technique. Elle assure le dégagement d'une des lèvres du pneu de la roue lors du montage ou du démontage de celui-ci.

Selon l'invention, le dispositif pour insonoriser la roue 1 est composé d'au moins une couronne 11 sensiblement cylindrique, placée concentriquement à la jante 3, comportant au moins une couche d'un matériau viscoélastique, non représentée, et d'au moins un moyen de couplage mécanique de ladite couronne cylindrique sur la jante 3, ledit moyen de couplage assurant un cerclage de ladite couronne sur les parties 4 et 5 cylindriques de la jante 3.

La couronne 11 est réalisée à partir d'au moins une bande de tôle métallique roulée, de préférence en acier.

La couronne 11 a, dans cet exemple de réalisation, en coupe transversale et comme représenté sur la Fig. 2, une section en oméga, les deux ailes 12 du oméga formant deux bords circulaires d'appui qui assurent le contact de la couronne 11 avec les parties supérieures de la base creuse de la jante 3 formées par les épaulements 9 et 10. Le contact de la couronne 11 sur la jante 3 peut être prolongé sur les parties des épaulements formant la base creuse de ladite jante.

La section en oméga de la couronne 11 permet de conserver, à la roue, la base creuse pour le montage et le démontage de pneu et le dispositif permet d'améliorer la rigidité pour éviter ses vibrations propres, et d'obtenir une surface augmentée pour l'atténuation des vibrations de la roue. La forme en oméga de la couronne 11 permet également un bon contact de cette couronne 11 sur les épaulements de la jante 3 et de centrer ladite couronne dans la base creuse de ladite jante.

Selon l'invention, une couronne 11 ayant une section dont la forme est autre que celle de l'oméga peut être utilisée lorsque la forme choisie assure, d'une part, un dégagement des lèvres du pneu lors de son montage ou démontage, et d'autre part, un appui sur les épaulements de la jante 3.

La couronne 11 comporte au moins une couche de matériau viscoélastique, matériau ayant la propriété d'absorber l'énergie due à des vibrations mécaniques, cette énergie étant transformée en chaleur dans la masse du matériau. La couronne 11 peut être réalisée à partir d'une bande de tôle de type sandwich. La couche de matériau viscoélastique est, dans ce cas, insérée entre deux peaux métalliques par exemple en acier, pour former la structure sandwich.

La couronne 11 du dispositif comporte des moyens de couplage mécanique avec la jante 3 de la roue 1. Ces moyens de couplage placent la couronne 11 sous tension, de façon que le cerclage réalisé sur la jante 3 permette aux vibrations de la roue d'être transmises au matériau viscoélastique de la couronne 11 pour obtenir l'effet d'absorption d'énergie.

La couronne 11 peut être composée d'au moins deux bandes demi-cylindriques, ce qui facilite l'ajustement de ladite couronne sur la roue 1.

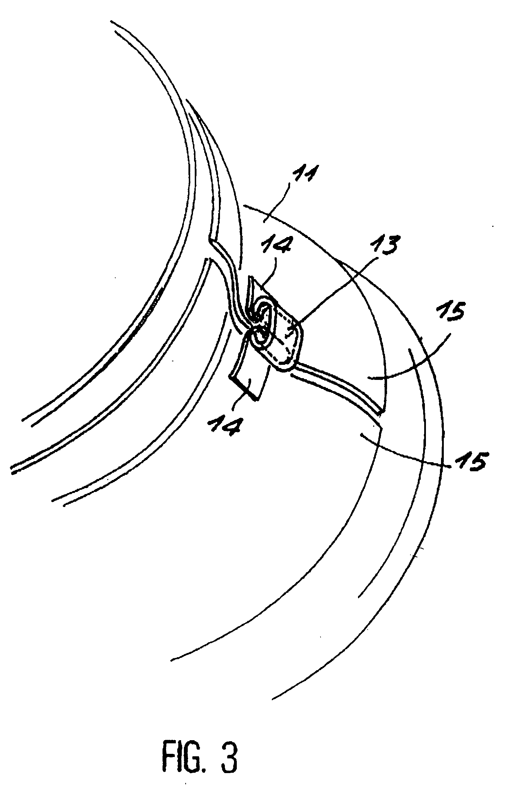

Selon un exemple de réalisation, comme représenté sur la Fig. 3, le moyen de couplage est composé d'une agrafe en "C" 13 associée à des moyens d'accrochage formées par au moins deux crochets 14 ménagés sur les extrémités 15 de la bande constituant la couronne 11. L'agrafe en "C" permet, par son élasticité, d'exercer une tension sur la couronne pour le maintien de ladite couronne sur la jante 3.

Selon une variante, les moyens d'accrochage de l'agrafe en "C" peuvent être formés par au moins deux lumières découpées près des extrémités 15 de la bande constituant la couronne 11.

Tout autre moyen d'accrochage peut être envisagé.

Des mesures ont été effectuées pour mettre en évidence l'effet d'absorption de l'énergie vibratoire communiquée à une roue de véhicule automobile.

Ces mesures ont été effectuées avec un dispositif comportant une couronne 11 ayant, en coupe, une section en oméga et un moyen de couplage mécanique, sous tension, comme représenté sur la Fig. 3.

Une roue 1 de véhicule automobile est soumise à vibrations de façon à matérialiser les modes de vibrations de la roue, d'une part, sans le dispositif de l'invention et, d'autre part, avec ledit dispositif de l'invention.

Le dispositif associé à la roue est composé d'une couronne mise en forme à partir d'une tôle sandwich du type "SOL CONFORT" ayant une épaisseur de 0,75mm. La couronne présente une section en oméga dont les deux ailes s'appuient sur la partie supérieure de la base creuse de la jante. La couronne est fixée sous tension mécanique au moyen d'agrafes en acier à ressort formant des clips resserrant deux crochets ménagés sur les extrémités de la ou des bandes constituant la couronne.

On a remarqué que la jante est l'élément le plus influent de la roue, et plus particulièrement les parties arrière et avant de la jante.

Le dispositif selon l'invention permet de réduire notamment les vibrations à basses fréquences.

## Revendications

1. Dispositif pour.insonoriser une roue, et, notamment une roue (1) de véhicule automobile, roue comprenant un voile (2) central circulaire, une jante (3) sensiblement cylindrique composée d'une partie cylindrique arrière (4) et d'une partie cylindrique avant (5), les parties étant séparées par le plan du voile (3) qui s'étend sensiblement perpendiculairement à l'axe (6) de la jante (3), ledit dispositif comprenant au moins une couronne (11) sensiblement cylindrique, placée concentriquement à la jante (3) et au moins un moyen de couplage mécanique de ladite couronne cylindrique (11) sur la jante (3), ledit moyen de couplage assurant un cerclage de ladite couronne (11) sur les parties (4, 5) cylindriques de la jante (3), **caractérisé en ce que** la couronne (11) comporte au moins une couche d'un matériau viscoélastique et a une section transversale en forme d'oméga et comporte deux bords circulaires (12) d'appui assurant le contact de ladite couronne avec les parties (4, 5) cylindriques de la jante.

2. Dispositif selon la revendication 1 **caractérisé en ce que** la couronne (11) est métallique.

3. Dispositif selon la revendication 2, **caractérisé en ce que** la couronne (11) est en acier.

4. Dispositif selon la revendication 1, **caractérisé en ce que** la couronne (11) est en un matériau de type sandwich.

5. Dispositif selon l'une quelconque des revendications précédentes, **caractérisé en ce que** la couronne (11) est formée par au moins une bande dont les extrémités (15) sont reliées par ledit moyen de couplage.

6. Dispositif selon l'une quelconque des revendications précédentes, **caractérisé en ce que** ledit moyen de couplage de la couronne (11) comprend au moins une agrafe (13) coopérant avec des organes d'accrochage (14) ménagés sur les extrémités de ladite au moins une bande formant ladite couronne (11)

7. Dispositif selon la revendication 6, **caractérisé en ce que** l'agrafe est formée par une agrafe (13) en "C" permettant, par son élasticité, d'exercer une tension sur la couronne (11) et le maintien de ladite couronne sur la jante (3).

8. Dispositif selon l'une quelconque des revendications précédentes, **caractérisé en ce que** les organes d'accrochage sont formés par au moins deux crochets (14) disposés sur les extrémités de ladite au moins une bande formant ladite couronne.

9. Dispositif selon l'une quelconque des revendications 1 à 7, **caractérisé en ce que** les organes d'accrochage sont formés par au moins deux lumières ménagées sur les extrémités de ladite au moins une bande formant ladite couronne (11)

## Patentansprüche

1. Vorrichtung zur Geräuschdämpfung eines Rades (1), insbesondere eines Kraftfahrzeugrades, wobei das Rad einen kreisförmigen Einzug (2) und eine ungefähr zylindrische Felge (3) umfasst, welche sich aus einem hinteren zylindrischen Teil (4) und einem vorderen zylindrischen Teil (5) zusammensetzt, wobei die beiden Teile durch die Ebene des Einzugs (2) voneinander getrennt sind, welche sich ungefähr senkrecht zur Achse (6) der Felge (3) erstreckt, wobei besagte Vorrichtung mindestens einen ungefähr zylindrischen Kranz (11) umfasst, welcher konzentrisch an der Felge (3) angebracht ist, und sich mindestens ein mechanisches Kopplungsmittel des besagten zylindrischen Kranzes (11) auf der Felge (3) befindet, wobei das Kopplungsmittel eine Umschlingung des besagten Kranzes (11) um die zylindrischen Teile (4, 5) der Felge (3) sicherstellt, **dadurch gekennzeichnet, dass** der Kranz (11) mindestens eine Schicht eines viskoelastischen Materials umfasst und einen Querschnitt in Form eines Omega hat und zwei kreisförmige Stützränder (12) umfasst, welche den Kontakt des besagten Kranzes mit den zylindrischen Teilen (4, 5) der Felge sicherstellen.

2. Vorrichtung nach Anspruch 1, **dadurch gekennzeichnet, dass** der Kranz (11) metallisch ist.

3. Vorrichtung nach Anspruch 2, **dadurch gekennzeichnet, dass** der Kranz (11) aus Stahl ist.

4. Vorrichtung nach Anspruch 1, **dadurch gekennzeichnet, dass** der Kranz (11) aus einem sandwichartigen Material ist.

5. Vorrichtung nach einem der vorhergehenden Ansprüche, **dadurch gekennzeichnet, dass** der Kranz (11) aus mindestens einem Band gebildet wird, dessen äußere Enden (15) durch das besagte Kopplungsmittel miteinander verbunden werden.

6. Vorrichtung nach einem der vorhergehenden Ansprüche, **dadurch gekennzeichnet, dass** das besagte Kopplungsmittel des Kranzes (11) mindestens eine Klammer (13) umfasst, welche an Anhak vorrichtungen (14) angreift, welche auf den äußeren Enden des besagten mindestens einen Bandes angeordnet sind, welches den besagten Kranz (11) bildet.

7. Vorrichtung nach Anspruch 6, **dadurch gekennzeichnet, dass** die Klammer durch eine Klammer (13) in Form eines C gebildet wird, durch deren Elastizität eine Spannung auf den Kranz (11) ausgeübt und der Halt des Kranzes auf der Felge (3) bewirkt werden kann.

8. Vorrichtung nach einem der vorhergehenden Ansprüche, **dadurch gekennzeichnet, dass** die Anhakvorrichtungen aus mindestens zwei Haken (14) auf den äußeren Enden des mindestens einen Bandes bestehen, welches den besagten Kranz bildet.

9. Vorrichtung nach einem der Ansprüche 1 bis 7, **dadurch gekennzeichnet, dass** die Anhakvorrichtungen aus mindestens zwei Öffnungen bestehen, welche auf den äußeren Enden des besagten mindestens einen Bandes angeordnet sind, welches den besagten Kranz (11) bildet.

## Claims

1. Device for soundproofing a wheel, and particularly a motorised vehicle wheel (1), the wheel comprising a circular centre disc (2), a more or less cylindrical rim (3) consisting of a rear cylindrical part (4) and a front cylindrical part (5), the parts being separated by the plane of the disc (2) which extends more or less perpendicular to the centreline (6) of the rim (3), the said device comprising at least a more or less cylindrical collar (11) fitted concentrically to the rim (3) and at least a means of mechanically coupling the said cylindrical collar (11) to the rim (3), the said coupling means providing a banding of the said collar (11) to the cylindrical parts (4, 5) of the rim (3), **characterised in that** the collar (11) has at least one layer of a viscoelastic material and an omega-shaped cross section and has two supporting circular edges (12) ensuring contact of the said collar with the cylindrical parts (4, 5) of the rim.

2. Device according to Claim 1 **characterised in that** the collar (11) is made from metal.

3. Device according to Claim 2, **characterised in that** the collar (11) is made from steel.

4. Device according to Claim 1, **characterised in that** the collar (11) is made from a sandwich type material.

5. Device according to any of the preceding claims, **characterised in that** the collar (11) is formed by at least a band, the ends of which (15) are connected by the said coupling means.

6. Device according to any of the preceding claims, **characterised in that** the said means of coupling the collar (11) comprise at least a fastener (13) working in conjunction with hooking parts (14) arranged on the ends of at least one said band forming the said collar (11).

7. Device according to Claim 6, **characterised in that** the fastener is in the form of a C-shaped fastener (13) which, thanks to its elasticity, allows tension to be exerted on the collar (11), and the said collar (11) to be held to the rim (3).

8. Device according to any of the preceding claims, **characterised in that** the hooking-on parts are formed of at least two hooks (14) arranged on the ends of at least one said band forming the said collar.

9. Device according to any one of the Claims 1 to 7, **characterised in that** the hooking-on parts consist of at least two ports made in the ends of at least one band closing the said collar (11).
